# EUROPÄISCHE PATENTSCHRIFT

(11) **EP 1 199 132 B1**
(45) Veröffentlichungstag und Bekanntmachung des Hinweises auf die Patenterteilung: **07.07.2004**
(21) Anmeldenummer: 01123412.7
(22) Anmeldetag: 28.09.2001
(51) Int. Cl.: B23Q 5/40

(54) **Stützenanordnung für eine lange, fest eingespannte Spindel**
Support arrangement for a long, fixed spindle
Dispositif de support pour une longue broche serrée

(30) Priorität: 19.10.2000 DE 10051929
(43) Veröffentlichungstag der Anmeldung: 24.04.2002
(73) Patentinhaber: AXA-Entwicklungs- und Maschinenbaugesellschaft für Produktionstechnische Anlagen und Geräte mbH, 48624 Schöppingen (DE)
(72) Erfinder: Gottfried, Wolf, Dipl.-Ing., 48653 Coesfeld (DE); Börger, Markus, Dipl.-Ing., 48356 Nordwalde (DE)
(74) Vertreter: Linnemann, Winfried

(56) Entgegenhaltungen:
- EP-A- 0 482 268
- DE-C- 3 139 031

## Beschreibung

Die vorliegende Erfindung betrifft eine Stützenanordnung für eine lange, fest eingespannte Spindel, insbesondere für die Spindel eines Kugelgewindetriebes an einer Werkzeugmaschine, wobei an der Spindel ein Schlitten mittels einer antreibbaren Mutter verfahrbar ist, wobei die Stützenanordnung mehrere beiderseits des Schlittens angeordnete, jeweils die Spindel gegen Bewegungen quer zur spindel-Längsrichtung sichernde Stützen umfaßt, die parallel zur Spindel auf einer Laufbahn verfahrbar sind und die entsprechend den Verfahrbewegungen des Schlittens auf der einen Seite vom Schlitten in Richtung zum Ende der Spindel verschoben und auf der anderen Seite vom Schlitten mitgenommen und in voneinander beabstandeten Einsatzpositionen entlang der Spindel abgesetzt werden. Siehe, z.B., EP-0 482 268-A.

Bei vielen Maschinen ist es üblich, die Bewegung von verfahrbaren Maschinenteilen, z.B. von Maschinenschlitten, mittels eines Kugelgewindetriebes mit einer Spindel zu bewirken. Beispielsweise lassen sich bei Werkzeugmaschinen nach der Fahrständerbauweise sehr lange Verfahrwege, z.B. in der Größenordnung von etwa 15 m und mehr, für den Fahrständer realisieren. Ab etwa 2 bis 3 m Verfahrweg wird bei Kugelgewindetrieben nicht mehr die Spindel sondern die Mutter bewegt. Dazu wird die Spindel an ihren beiden Enden fest eingespannt und die Mutter wird angetrieben. Abhängig von Spindellänge und -durchmesser und der Spindel- oder Mutterdrehzahl gibt es kritische Drehzahlen, bei denen die Spindel in Schwingungen gerät, durch die die Spindel, die Mutter und die übrige Maschine Schaden nehmen. Bei Spindeln bis zu etwa 10 m Länge reichen eine oder mehrere Stützen aus, die die Spindel nur unterseitig abstützen und die an festgelegten Positionen montiert sind. Die Stützen sind durch einen Zylinder oder mechanisch mittels einer Steuerkurve wegschwenkbar oder absenkbar, bevor die Mutter des Schlittens die Position der Stütze überfährt. Bei Spindellängen über etwa 10 m wird es erforderlich, die Spindel in festgelegten Abständen mittels mehrerer Stützen in Form einer Hülse rundum abzustützen, weil die Schwingungen die Spindel ansonsten seitlich oder nach oben ausbrechen lassen würden. Hierzu ist es aus der Praxis des Maschinenbaus bereits bekannt, mehrere Stützen beidseitig des Schlittens auf einer Laufbahn parallel zur Spindel-Längsrichtung verschiebbar zu führen und die Stützen beim Verfahren des Schlittens mitzunehmen und in festgelegten Abständen auf dem freien Spindelteil zu verteilen. Nachteilig ist bei den bekannten Lösungen, daß die Stützen in den Einsatzpositionen keine feste Arretierung erfahren und deshalb durch Erschütterungen oder äußeren Eingriff ihre gewünschte Einsatzposition verlassen können. Außerdem ist bei den bekannten Lösungen der Nachteil zu erwähnen, daß es beim An- und Abkuppeln der einander benachbarten Stützen und des Schlittens zu ruckartigen oder schlagartigen Beschleunigungen und Verzögerungen kommt. Diese führen zu Erschütterungen, die mit der Zeit zu Schäden an den Stützen, am Schlitten und an weiteren Teilen der Maschine führen.

Weiter ist aus der DE 31 39 031 C1 eine Stützenanordnung für eine lange, ortsfest eingespannte Spindel mit einem Kugelgewindetrieb für eine Werkzeugmaschine bekannt, wobei an der Spindel ein Schlitten mittels einer antreibbaren Mutter verfahrbar ist. Dabei umfaßt die Stützenanordnung beiderseits des Schlittens je eine die Spindel gegen Bewegungen quer zu ihrer Längsachse sichernde Stütze. Die Stützen sind parallel zur Spindel auf einer Laufbahn verfahrbar und werden entsprechend den Verfahrbewegungen des Schlittens in Richtung zum Ende der Spindel und umgekehrt verschoben und mitgenommen, wobei sie über Anschlag- und Zusatzsperren arretiert werden. Die Laufbahn für die Stützen ist hier auf dem Schlitten vorgesehen, sodaß die Länge dieser Laufbahn durch die Schlittenlänge begrenzt ist. Da zudem auf jeder Seite des Schlittens nur je eine Stütze vorhanden ist, verbleibt insbesondere bei weit in Richtung zu seinen Endpositionen verfahrenem Schlitten noch jeweils ein relativ langer nicht unterstützter Abschnitt der Spindel. Deshalb kann diese Stützenanordnung auch nur eine begrenzte Wirkung erzielen, die mit wachsender Spindellänge immer schlechter wird, sodaß ein Einsatz nur bei entsprechend begrenzten Spindellängen sinnvoll ist; bei besonders langen Spindeln bleiben die vorstehend erläuterten Schwingungsprobleme weitestgehend bestehen.

Für die vorliegende Erfindung stellt sich deshalb die Aufgabe, eine Stützenanordnung der eingangs genannten Art zu schaffen, die die dargelegten Nachteile vermeidet und mit der einerseits eine zuverlässige und stets positionsgenaue Abstützung der Spindel gewährleistet ist und bei der die An- und Abkuppelvorgänge zwischen den Stützen und dem Schlitten nicht zu Folgeschäden an Schlitten und Stützen oder weiteren Teilen der Maschine führen.

Zur Lösung dieser Aufgabe wird eine Stützenanordnung der eingangs genannten Art vorgeschlagen, die dadurch gekennzeichnet ist,
- daß jede Stütze eine zwischen einer Löse- und Eingriffsstellung verstellbare Kupplung zur mechanischen Verbindung mit einer benachbarten Stütze oder mit dem Schlitten aufweist,
- daß jede Stütze einen zwischen einer Löse- und Eingriffsstellung verstellbaren Riegel zur mechanischen Festlegung in der Einsatzposition aufweist und
- daß die Kupplung und der Riegel derart angeordnet und mechanisch miteinander gekoppelt sind, daß bei Einlaufen einer Stütze in ihre Einsatzposition der Riegel unter sanftem Abbremsen der Stütze selbsttätig in Eingriffsstellung geht und zugleich die Kupplung in Lösestellung überführt und daß bei Auflaufen des Schlittens oder der Stütze auf eine benachbarte, in Einsatzposition befindliche Stütze die Kupplung unter sanftem Beschleunigen der benachbarten Stütze selbsttätig in Eingriffsstellung geht und zugleich den Riegel in Lösestellung überführt.

Mit der vorliegenden Erfindung wird vorteilhaft erreicht, daß sowohl eine zuverlässige Kupplung und Entkupplung zwischen benachbarten Stützen sowie zwischen dem Schlitten und den diesem benachbarten Stützen als auch eine zuverlässige Festlegung jeder Stütze in ihrer zugehörigen Einsatzposition gewährleistet wird. Gleichzeitig ist das Herstellen und Lösen einerseits der Kupplung und andererseits des Riegels zwangsweise so miteinander gekoppelt, daß die An- und Abkuppelvorgänge und das Verriegeln und Entriegeln in der Einsatzposition gleichzeitig erfolgen. Somit werden harte und schlagartige Beschleunigungen und Verzögerungen von Stützen im Betrieb der Maschine vermieden. Dies sorgt für eine geringere Belastung der Maschine und somit für eine bessere Haltbarkeit und Zuverlässigkeit im Betrieb. Außerdem benötigt die Stützenanordnung gemäß Erfindung keinerlei aktive Betätigungsmittel, wie pneumatische oder hydraulische Zylinder oder elektromagnetische oder elektromotorische Elemente, so daß eine einerseits einfache und andererseits sehr zuverlässige Konstruktion erreicht wird, die nur einen geringen Wartungsaufwand erfordert und die nur eine sehr geringe Störungsanfälligkeit aufweist.

Um die Zahl der erforderlichen Einzelteile und damit den Konstruktionsaufwand möglichst gering zu halten, ist bevorzugt vorgesehen, daß die verstellbare Kupplung und der verstellbare Riegel jeder Stütze in einem begrenzt verschwenkbaren Hebel zusammengefaßt sind, der in seiner einen Verschwenkungsendstellung mit einem festen Kupplungsteil einer benachbarten Stütze oder des Schlittens in Eingriff steht und der in seiner anderen Verschwenkungsendstellung mit einem festen Riegelteil der Laufbahn in Eingriff steht.

Weiterhin ist vorgesehen, daß der Hebel und die festen Kupplungs- und Riegelteile jeweils mit zusammenwirkenden Steuernuten und -stiften ausgestattet sind. Die Steuernuten und -stifte sorgen einerseits für die erforderliche Schwenkbewegung des Hebels durch die Relativbewegung der Stützen bzw. einer Stütze und des Schlittens zueinander und bilden andererseits die Kupplung und den Riegel, die abwechselnd in und außer Eingriff stehen.

Um die mechanischen Belastungen beim An- und Abkuppeln an bzw. von einer benachbarten Stütze oder dem Schlitten so gering wie möglich zu halten, ist weiter vorgesehen, daß die Steuernuten als stetig verlaufende, das sanfte Beschleunigen und Abbremsen der Stützen bei deren An- und Abkuppeln bewirkende Kurven ausgeführt sind.

Weiter ist vorgesehen, daß der Hebel in seinen Verschwenkungsendstellungen durch ein Rastmittel, vorzugsweise ein Kugelschnäpper, gesichert ist. Auf diese Weise ist sichergestellt, daß der Hebel sich durch äußere mechanische Einflüsse, wie z.B. Vibrationen von einem Maschinenantrieb, nicht ungewollt aus seiner Soll-Position entfernt. Zugleich ist aber die Verstellung des Hebels während des An- und Abkuppelns nicht behindert, da lediglich eine relativ geringe Kraft zur Überwindung der Rastmittel erforderlich ist.

Eine weitere Ausgestaltung der Stützenanordnung sieht vor, daß die festen Riegelteile in vorgegebenen festen Abständen entlang der Laufbahn angebracht sind, daß jeder feste Riegelteil in Querrichtung zur Laufbahn gesehen einen individuellen Abstand von dieser aufweist und daß nur der entsprechend positionierte Riegel einer einzigen Stütze mit dem zugehörigen festen Riegelteil in Eingriff bringbar ist. Mit dieser Maßnahme wird vorteilhaft erreicht, daß auch bei den festen Riegelteilen, die der Laufbahn zugeordnet sind, keine aktiven Elemente benötigt werden. Jeder feste Riegelteil kann aufgrund seiner Positionierung nur mit einem entsprechend positionierten Riegel einer einzigen Stütze in Eingriff treten, während die Riegel aller anderen Stützen an dem betreffenden festen Riegelteil vorbeilaufen.

Weiter ist bevorzugt vorgesehen, daß jede Stütze einen auf der Laufbahn verfahrbaren Laufwagen sowie eine die Spindel umgreifende Stützhülse umfaßt. Auf diese Weise kann die Stützenanordnung mit relativ geringem Aufwand an unterschiedliche Durchmesser der zu stützenden Spindel angepaßt werden, indem lediglich die Stützhülse ausgetauscht wird, während die Laufbahn und der jeweilige Laufwagen unverändert beibehalten werden können.

Um die Stützen sowohl reibungsarm als auch spielfrei verfahren zu können, ist zweckmäßig die Laufbahn eine Laufschiene und ist zweckmäßig der Laufwagen mittels einer Kugelführung auf der Laufschiene geführt.

Die vorstehend beschriebene Stützenanordnung ist nicht nur zur Abstützung einer Spindel geeignet; zur Vergrößerung des Anwendungsgebietes ist vorgesehen, daß die Stützenanordnung zusätzlich zu der Spindel die Elemente einer oder mehrerer Teleskop-Abdeckungen oder -Schiebetüren, insbesondere einer Werkzeugmaschine, verfahrbar abstützt und trägt. Derartige Abdeckungen oder Schiebetüren sind an Werkzeug- oder anderen Maschinen zum Schutz des Bedienungspersonals vorgeschrieben und müssen in der Lage sein, bewegten Maschinenteilen zu folgen. Zur Erfüllung der hiermit verbundenen Trag- und Führungsaufgaben ist die anmeldungsgemäße Stützenanordnung gut geeignet. Dabei werden beim Verfahren der Elemente der Teleskop-Abdeckungen oder -Schiebetüren harte Stöße und die damit verbundenen Beschädigungsgefahren und Lärmemissionen vermieden.

Ein Ausführungsbeispiel der Erfindung wird im folgenden anhang einer Zeichnung erläutert. Die Figuren der Zeichnung zeigen:
- Figur 1: einen Ausschnitt aus einer Werkzeugmaschine mit mehreren Stützen sowie einer teilweise dargestellten Spindel mit einem ebenfalls teilweise dargestellten Schlitten, in Seitenansicht,
- Figur 2: die Stützenanordnung aus Figur 1 ohne den Schlitten, in Draufsicht,
- Figur 3a bis Figur 3d: den Ankuppelvorgang zweier Stützen in einem zeitlichen Ablauf, in Seitenansicht, und
- Figur 4: ein Geschwindigkeitsdiagramm, das die Beschleunigung einer Stütze während des Ankuppelvorganges zeigt.

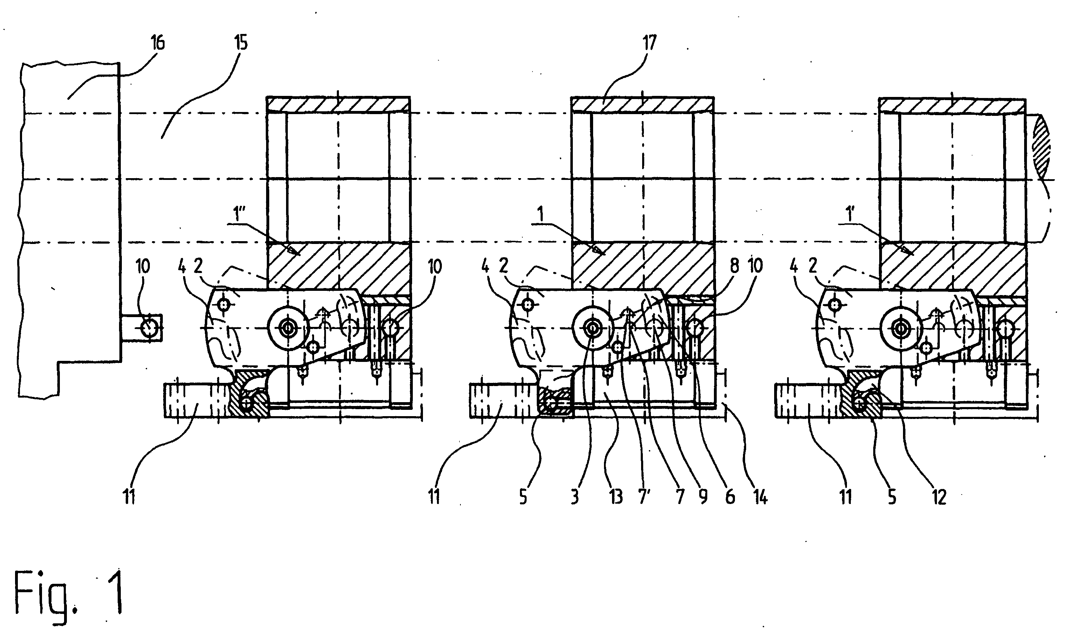

Figur 1 der Zeichnung zeigt einen Ausschnitt aus einer Werkzeugmaschine, wobei ganz links ausschnittsweise ein Schlitten 16 angedeutet ist. Rechts von dem Schlitten 16 sind drei Stützen 1, 1', 1'' dargestellt, wobei durch die Stützen 1 bis 1'' und den Schlitten 16 eine Spindel 15 eines Kugelgewindetriebes verläuft. An ihrem nicht dargestellten rechten Ende ist die Spindel 15 fest eingespannt. Auf der anderen, ebenfalls nicht sichtbaren Seite des Schlittens 16 läuft die Spindel 15 weiter und ist auch dort an ihrem äußeren Ende fest eingespannt. Auch auf diesem Abschnitt der Spindel 15 links vom Schlitten 16 sind mehrere Stützen vorgesehen, die spiegelsymmetrisch zu den dargestellten Stützen ausgeführt sind und deshalb nicht nochmals gezeichnet sind.

Die in Figur 1 sichtbaren Stützen 1 bis 1'' sind untereinander weitestgehend gleich ausgeführt und besitzen jeweils einen Laufwagen 13 sowie eine Stützhülse 17. Der Laufwagen 13 aller Stützen 1 bis 1'' ist auf einer gemeinsamen Laufbahn 14 parallel zur Längsrichtung der Spindel 15 verschiebbar. Die den oberen Teil der Stützen 1 bis 1'' bildende Stützhülse 17 umfaßt die Spindel 15 rundum und sichert diese gegen Auslenkbewegungen quer zu ihrer Längsrichtung.

Der Schlitten 16 ist mittels einer darin vorgesehenen, drehantreibbaren Mutter entlang der Spindel 15 auf einer nicht dargestellten Laufbahn üblicher Ausführung verfahrbar. Entsprechend der Verfahrbewegung und -position des Schlittens 16 befinden sich die Stützen 1 bis 1'' in unterschiedlichen Positionen. Wenn der Schlitten 16 nach links verfahren ist, nehmen die Stützen 1 bis 1'' vorgegebene Einsatzpositionen ein, in denen sie in vorgegebenen Abständen voneinander gleichmäßig über den freien Teil der Spindel 15 verteilt positioniert sind. Diese Stellung der Stützen 1 bis 1'' ist in Figur 1 dargestellt, wobei aber der Abstand zwischen den Stützen 1 bis 1'' aus Darstellungsgründen verkleinert ist; in der Praxis haben die Stützen 1 bis 1'' in ihren Einsatzpositionen einen Abstand von beispielsweise etwa 1 bis 2 m voneinander.

In ihrer Einsatzposition sind die Stützen 1 bis 1'' verriegelt, so daß eine ungewollte weitere Verschiebung nicht mehr möglich ist. Hierzu besitzt jede Stütze 1 bis 1'' einen Hebel 2, der um einen Lagerzapfen 3 verschwenkbar gelagert ist. Die durch den Lagerzapfen 3 gebildete Schwenkachse verläuft dabei senkrecht zur Spindel 15 und senkrecht zur Zeichnungsebene der Figur 1. In einem nach unten weisenden Bereich besitzt der Hebel 2 einen Steuerstift 5, der bei jeder der Stützen 1 bis 1'' eine andere Richtung und/oder eine andere Länge aufweist. Jeder dieser Steuerstifte 5 wirkt mit einem bestimmten festen Riegelteil 11 zusammen, der Teil der Laufbahn 14 oder eines sonstigen ortsfesten Maschinenteils ist. Die festen Riegelteile 11 sind in vorgegebenen Positionen angeordnet, die den Einsatzpositionen der Stützen 1 bis 1'' entsprechen. Im festen Riegelteil 11 befindet sich jeweils eine Steuernut 12, die mit dem jeweils zugehörigen Steuerstift 5 zusammenwirkt. Im dargestellten Zustand gemäß Figur 1 ist jeder Steuerstift 5 am Ende der zugehörigen Steuernut 12 positioniert, so daß eine weitere Verschiebung der Stützen 1 bis 1'' entlang der Laufbahn 14 unterbunden ist. Die Laufbahn 14 ist in Figur 1 zwar unterbrochen gezeichnet, sie ist aber durchgehend ausgeführt und nimmt alle Stützen 1 bis 1'' mittels deren Laufwagen 13 auf.

Wenn der Schlitten 16 nach rechts verfahren wird, müssen die Stützen 1 bis 1'' von links nach rechts aufeinanderfolgend aus ihrer Einsatzposition entfernt und dann zusammen mit dem Schlitten 16 nach rechts bewegt werden. Hierzu sind an allen Stützen 1 bis 1'' sowie an dem Schlitten 16 Kupplungsmittel vorgesehen. Die Kupplungsmittel bestehen jeweils einerseits aus einer Steuernut 4 im Hebel 2 und andererseits jeweils einem Steuerstift 10 am Schlitten 16 sowie an jeder Stütze 1 bis 1''.

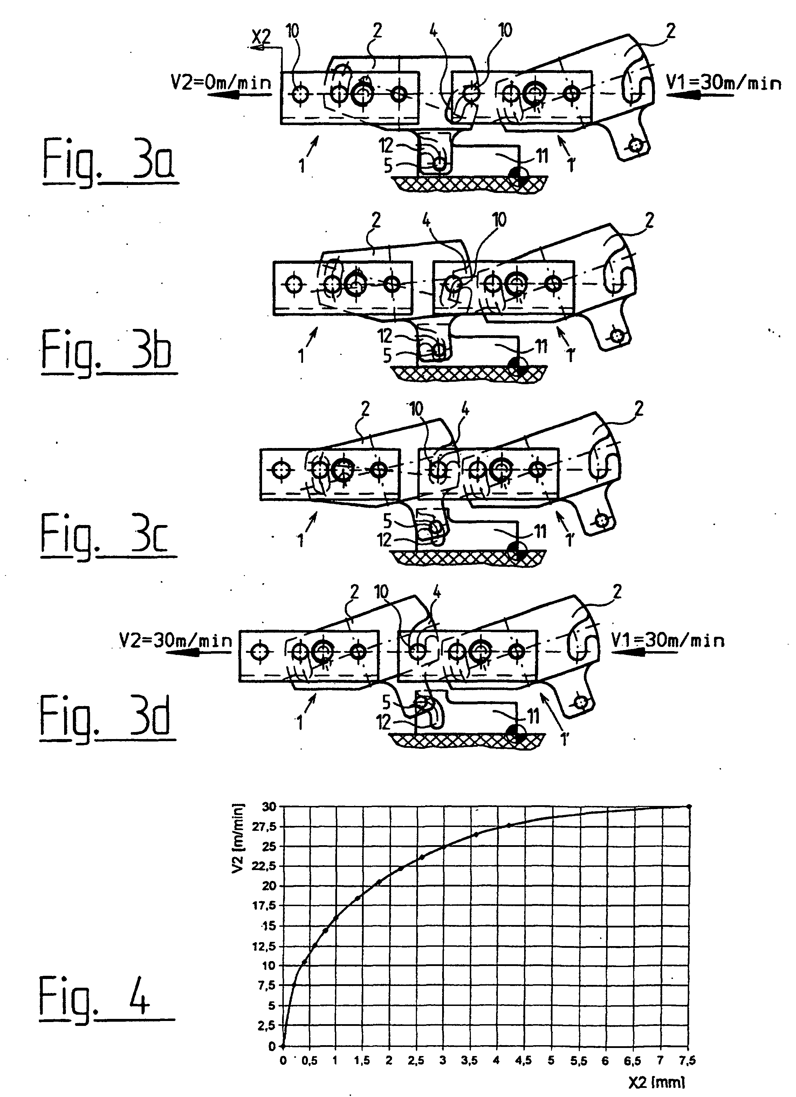

Wird nun in Figur 1 der Schlitten 16 nach rechts bewegt, tritt dessen Steuerstift 10 in die Steuernut 4 der unmittelbar benachbarten Stütze 1'' ein. Durch das Zusammenwirken von Steuerstift 10 und Steuernut 4 wird der Hebel der Stütze 1'' zwangsweise gegen den Uhrzeigersinn verschwenkt, wodurch die Stütze 1'' aus ihrer Einsatzposition entriegelt wird und anschließend in einem mit dem Schlitten 16 gekuppelten Zustand von diesem nach rechts verschoben wird. Das Zusammenwirken von benachbarten Stützen bei deren Verschiebung wird später noch anhand der Figuren 3a bis 3d erläutert.

Damit der Hebel 2 sich nicht ungewollt verstellt, ist er mit Rastmitteln 8, hier in Form eines Kugelschnäppers versehen, der mit zwei Rastmulden 7, 7' an der vom Betrachter abgewandten Seite des Hebels 2 zusammenwirkt. Hierdurch ist der Hebel 2 in seinen Verschwenkungsendstellungen jeweils arretiert. Zur Begrenzung des Verschwenkungsweges des Hebels 2 besitzt dieser ebenfalls an der dem Betrachter abgewandten Seite eine bogenförmige Nut 6, in die ein Begrenzungsstift 9 hineinragt, der vom Laufwagen 13 ausgeht.

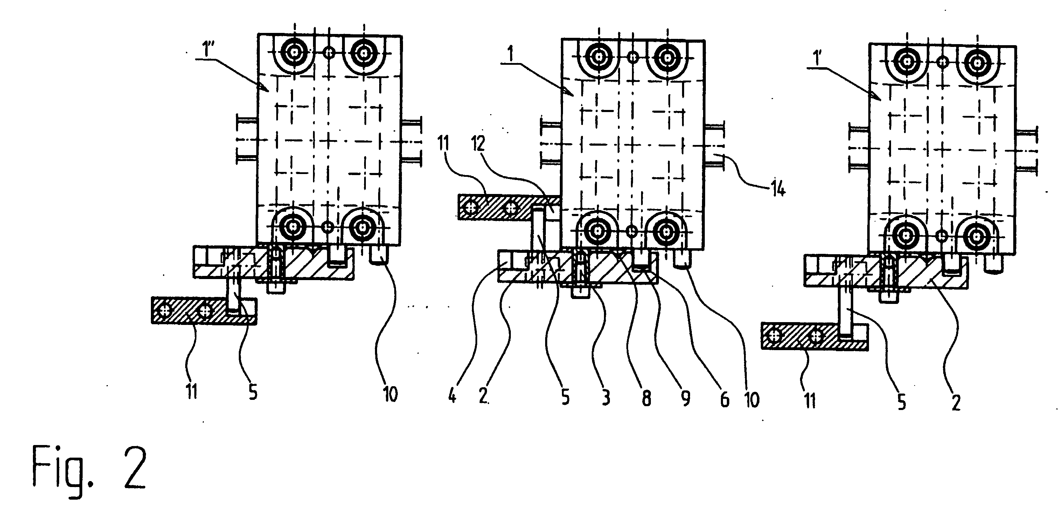

Figur 2 der Zeichnung zeigt die drei Stützen 1, 1', 1'' aus Figur 1 nun in Draufsicht, wobei auch in Figur 2 die Stützen 1 bis 1'' in ihrer Einsatzposition, jedoch in einem verkleinerten Abstand voneinander, dargestellt sind.

Wie die Figur 2 verdeutlicht, besitzt der feste Riegelteil 11 für jede Stütze 1 bis 1'' eine individuelle Position, im vorliegenden Fall einen individuellen Querabstand von der Laufbahn 14. Auf diese Weise ist gewährleistet, daß jeder feste Riegelteil 11 nur mit dem Steuerstift 5 einer bestimmten Stütze 1 bis 1'' in Eingriff gelangen kann. Bei Verschiebung der Stütze 1 nach rechts läuft deren Steuerstift 5 behinderungsfrei an dem festen Riegelteil 11 der rechten Stütze 1' vorbei; in gleicher Weise läuft der Steuerstift 5 der linken Stütze 1'' bei deren Verschiebung nach rechts unbehindert sowohl an dem festen Riegelteil 11 der mittleren Stütze 1 als auch an dem festen Riegelteil 11 der rechten Stütze 1' vorbei.

Schließlich wird aus der Figur 2 deutlich, daß die einzelnen Stützen 1 bis 1'' untereinander weitestgehend identisch aufgebaut sind. Lediglich die Steuerstifte 5 weisen eine unterschiedliche Richtung und/oder eine unterschiedliche Länge auf. Die festen Riegelteile 11, die auf der einen Seite der Hebel 2 angeordnet sind, sind untereinander identisch; die festen Riegelteile 11, die auf der anderen Seite der Hebel 2 angeordnet sind, sind untereinander ebenfalls gleich und spiegelsymmetrisch zu den erstgenannten festen Riegelteilen 11 ausgebildet. Hinsichtlich der weiteren in Figur 2 eingetragenen Bezugsziffern wird auf die Beschreibung der Figur 1 verwiesen.

In den Figuren 3a, 3b, 3c und 3d ist ein Ankuppelvorgang zwischen zwei Stützen 1, 1' dargestellt, wobei aber nun ausschnittsweise Stützen 1, 1' dargestellt sind, die links vom Schlitten 16 (vergleiche Figur 1) positioniert sind.

In Figur 3a befindet sich die linke Stütze 1 noch in ihrer Einsatzposition und damit zunächst in Ruhe, d.h. sie hat eine Geschwindigkeit V2 = 0 m/min. Von rechts fährt die rechte Stütze 1' in Richtung auf die linke Stütze 1 heran, wobei in dem vorliegenden Beispiel die rechte Stütze 1' eine Bewegungsgeschwindigkeit von V1 = 30 m/min hat. In Figur 3a ist dabei der Moment gezeigt, in dem der am Hebel 2 der Stütze 1' angebrachte Steuerstift 10 gerade in den Anfang der Steuernut 4 im Hebel 2 der linken Stütze 1 eintritt.

In Figur 3b ist ein Zustand kurz nach dem Zustand gemäß Figur 3a dargestellt. Nun hat sich der Steuerstift 10 schon etwas weiter in die Steuernut 4 hineinbewegt. Aufgrund der nach vorne und unten weisenden Kurvenform der Steuernut 4 führt diese Bewegung des Steuerstifts 10 in die Steuernut 4 hinein dazu, daß der Hebel 2 der linken Stütze 1 entgegen dem Uhrzeigersinn verschwenkt wird. Hierdurch bewegt sich gleichzeitig der Steuerstift 5 am unteren Teil des Hebels 2 der linken Stütze 1 innerhalb seiner zugehörigen Steuernut 12 im festen Riegelteil 11 nach oben. Außerdem wird durch die rechte Stütze 1' die linke Stütze 1 in Bewegung versetzt, wobei aber deren Bewegungsgeschwindigkeit zunächst noch kleiner ist als V1.

In Figur 3c ist ein Zustand wieder zu einem etwas späteren Zeitpunkt gezeichnet. Hier hat sich der Steuerstift 10 infolge der weiteren Bewegung der rechten Stütze 1' nach links noch weiter in die Steuernut 4 hineinbewegt, wodurch entsprechend auch der Hebel 2 der linken Stütze 1 noch weiter gegen den Uhrzeigersinn verschwenkt ist. Demzufolge hat auch der Steuerstift 5 einen weiteren Weg entlang der zugehörigen Steuernut 12 im festen Riegelteil 11 zurückgelegt. Dabei ist die linke Stütze 1 weiter beschleunigt worden, hat aber immer noch nicht die Geschwindigkeit V1 erreicht.

Figur 3d schließlich zeigt den Zustand der beiden Stützen 1, 1' in ihrem nun vollständig gekuppelten Zustand. Der Steuerstift 10 ist nun am Ende der Steuernut 4 angelangt. Zugleich ist der Steuerstift 5 aus der zugehörigen Steuernut 12 freigekommen, die Stütze 1 ist nun also entriegelt. In diesem Zustand bewegen sich nun beide Stützen 1, 1' mit der gleichen Geschwindigkeit V1 = V2 = 30 m/min nach links.

Aufgrund der gebogenen Kurvenform der Steuernuten 4, 12 ergibt sich ein stetiges Beschleunigen der linken Stütze 1 beim Ankuppeln an die mit konstanter Geschwindigkeit heranfahrende rechte Stütze 1'. Stoß- oder ruckartige Belastungen werden so vermieden.

Figur 4 der Zeichnung schließlich ist ein Geschwindigkeitsdiagramm, das die Geschwindigkeit V2 der in den Figuren 3a bis 3d linken Stütze 1 in Abhängigkeit von ihrem während des Ankuppelns zurückgelegten Weg zeigt. Im vorliegenden Beispiel steigt die Geschwindigkeit V2 vom Wert 0 auf den Endwert 30 m/min innerhalb eines Weges von etwa 7,5 mm an, wobei der Verlauf der Geschwindigkeit durch die Kurve verdeutlicht ist. Die Beschleunigung ist dabei auf so niedrige Werte begrenzt, daß Schäden an den Stützen, an der Spindel oder an sonstigen Teilen der zugehörigen Maschine nicht auftreten.

## Patentansprüche

1. Stützenanordnung für eine lange, fest eingespannte Spindel (15), insbesondere für die Spindel (15) eines Kugelgewindetriebes an einer Werkzeugmaschine, wobei an der Spindel (15) ein Schlitten (16) mittels einer antreibbaren Mutter verfahrbar ist, wobei die Stützenanordnung mehrere beiderseits des Schlittens (16) angeordnete, jeweils die Spindel (15) gegen Bewegungen quer zur Spindel-Längsrichtung sichernde Stützen (1, 1', 1'') umfaßt, die parallel zur Spindel (15) auf einer Laufbahn (14) verfahrbar sind und die entsprechend den Verfahrbewegungen des Schlittens (16) auf der einen Seite vom Schlitten (16) in Richtung zum Ende der Spindel (15) verschoben und auf der anderen Seite vom Schlitten (16) mitgenommen und in voneinander beabstandeten Einsatzpositionen entlang der Spindel (15) abgesetzt werden,
**dadurch gekennzeichnet,**
- **daß** jede Stütze (1, 1', 1'') eine zwischen einer Löse- und Eingriffsstellung verstellbare Kupplung zur mechanischen Verbindung mit einer benachbarten Stütze (1, 1', 1'') oder mit dem Schlitten (16) aufweist,
- **daß** jede Stütze (1, 1', 1'') einen zwischen einer Löse- und Eingriffsstellung verstellbaren Riegel zur mechanischen Festlegung in der Einsatzposition aufweist und
- **daß** die Kupplung und der Riegel derart angeordnet und mechanisch miteinander gekoppelt sind, daß bei Einlaufen einer Stütze (1, 1', 1'') in ihre Einsatzposition der Riegel unter sanftem Abbremsen der Stütze (1, 1', 1'') selbsttätig in Eingriffsstellung geht und zugleich die Kupplung in Lösestellung überführt und daß bei Auflaufen des Schlittens (16) oder der Stütze (1, 1', 1'') auf eine benachbarte, in Einsatzposition befindliche Stütze (1, 1', 1'') die Kupplung unter sanftem Beschleunigen der benachbarten Stütze (1, 1', 1'') selbsttätig in Eingriffsstellung geht und zugleich den Riegel in Lösestellung überführt.

2. Stützenanordnung nach Anspruch 1, **dadurch gekennzeichnet, daß** die verstellbare Kupplung und der verstellbare Riegel jeder Stütze (1, 1', 1'') in einem begrenzt verschwenkbaren Hebel (2) zusammengefaßt sind, der in seiner einen Verschwenkungsendstellung mit einem festen Kupplungsteil (10) einer benachbarten Stütze (1, 1', 1'') oder des Schlittens (16) in Eingriff steht und der in seiner anderen Verschwenkungsendstellung mit einem festen Riegelteil (11) der Laufbahn (14) in Eingriff steht.

3. Stützenanordnung nach Anspruch 2, **dadurch gekennzeichnet, daß** der Hebel (2) und die festen Kupplungs- und Riegelteile (10, 11) jeweils mit zusammenwirkenden Steuernuten (4, 12) und -stiften (5, 10) ausgestattet sind.

4. Stützenanordnung nach Anspruch 3, **dadurch gekennzeichnet, daß** die Steuernuten (4, 12) als stetig verlaufende, das sanfte Beschleunigen und Abbremsen der Stützen (1, 1', 1'') bei deren An- und Abkuppeln bewirkende Kurven ausgeführt sind.

5. Stützenanordnung nach einem der Ansprüche 2 bis 4, **dadurch gekennzeichnet, daß** der Hebel (2) in seinen Verschwenkungsendstellungen durch ein Rastmittel (8), vorzugsweise ein Kugelschnäpper, gesichert ist.

6. Stützenanordnung nach einem der Ansprüche 2 bis 5, **dadurch gekennzeichnet, daß** die festen Riegelteile (11) in vorgegebenen festen Abständen entlang der Laufbahn (14) angebracht sind, daß jeder feste Riegelteil (11) in Querrichtung zur Laufbahn (14) gesehen einen individuellen Abstand von dieser aufweist und daß nur der entsprechend positionierte Riegel einer einzigen Stütze (1, 1', 1'') mit dem zugehörigen festen Riegelteil (11) in Eingriff bringbar ist.

7. Stützenanordnung nach einem der vorangehenden Ansprüche, **dadurch gekennzeichnet, daß** jede Stütze (1, 1', 1'') einen auf der Laufbahn (14) verfahrbaren Laufwagen (13) sowie eine die Spindel (15) umgreifende Stützhülse (17) umfaßt.

8. Stützenanordnung nach Anspruch 7, **dadurch gekennzeichnet, daß** die Laufbahn (14) eine Laufschiene ist und daß der Laufwagen (13) mittels einer Kugelführung auf der Laufschiene geführt ist.

9. Stützenanordnung nach einem der vorangehenden Ansprüche, **dadurch gekennzeichnet, daß** sie zusätzlich zu der Spindel (15) die Elemente einer oder mehrerer Teleskop-Abdeckungen oder -Schiebetüren, insbesondere einer Werkzeugmaschine, verfahrbar abstützt und trägt.

## Claims

1. Support arrangement for a long securely clamped spindle (15), in particular for the spindle (15) of a ball screw on a machine tool, wherein a slide (16) can be traversed along the spindle (15) by means of a drivable nut, wherein the support arrangement comprises several supports (1, 1', 1'') that are arranged on either side of the slide (16) and are each securing the spindle (15) against movements in transverse direction in relation to the longitudinal direction of the spindle, wherein said supports (1, 1', 1'') are capable of being traversed on a track (14) in parallel with the spindle (15) and are moved towards the end of the spindle (15) on one side of the slide (16) according to the traversing motions of the slide (16) and carried along on the other side of the slide (16) and deposited along the spindle (15) at positions of use that are spaced apart from each other,
**characterized in that**
- each support (1, 1', 1'') includes a clutch that can be shifted from a position of disengagement to a position of engagement and vice versa, said clutch being provided for mechanically connecting said support to a neighboring support (1, 1', 1'') or to the slide (16);
- each support (1, 1', 1'') includes a locking bar that can be shifted from a position of disengagement to a position of engagement, said locking bar being provided for mechanically locking said support in the position of use; and
- the clutch and the locking bar are arranged and mechanically coupled to each other such that, when a support (1, 1', 1'') is running into its position of use, the locking bar, while gently decelerating the support (1, 1', 1''), automatically enters the position of engagement and, at the same time, transfers the clutch to the position of disengagement and that, when the slide (16) or the support (1, 1', 1'') is approaching a neighboring support (1, 1', 1'') that is in its position of use, the clutch, while gently accelerating the neighboring support (1, 1', 1''), automatically enters the position of engagement and, at the same time, transfers the locking bar to the position of disengagement.

2. Support arrangement according to Claim 1, **characterized in that** the shiftable clutch and the shiftable locking bar of each support (1, 1', 1'') are comprised in a lever (2) that can be swivelled within a limited range and, in one of its swivel end positions, engages a stationary clutch part (10) of a neighboring support (1, 1', 1'') or of the slide (16) and, in its other swivel end position, engages a stationary locking bar part (11) of the track (14).

3. Support arrangement according to Claim 2, **characterized in that** the lever (2) and the stationary clutch and locking bar parts (10, 11) are each equipped with cooperating control grooves (4, 12) and control pins (5, 10).

4. Support arrangement according to Claim 3, **characterized in that** the control grooves (4, 12) are designed as continuously shaped curves causing the supports (1, 1', 1'') to gently accelerate and decelerate while they are engaging and disengaging.

5. Support arrangement according to anyone of Claims 2 through 4, **characterized in that** the lever (2) is secured in its swivel end positions by an arresting device, preferrably a ball catch.

6. Support arrangement according to anyone of Claims 2 through 5, **characterized in that** the stationary locking bar parts (11) are attached at defined fixed intervals along the track (14), that each stationary locking bar part (11), as seen in transverse direction of the track (14), is individually spaced apart from the latter and that only the accordingly positioned locking bar of a single support (1, 1', 1'') can engage the associated stationary locking bar part (11).

7. Support arrangement according to anyone of the preceding claims, **characterized in that** each support (1, 1', 1'') comprises a carriage (13) that can be moved on the track (14) as well as a support sleeve (17) that encompasses the spindle (15).

8. Support arrangement according to Claim 7, **characterized in that** the track (14) is a running rail and that the carriage (13) is guided on the running rail by a ball guide.

9. Support arrangement according to anyone of the preceding claims, **characterized in that** it supports or carries, in a movable manner, the elements of one or more telescopic coverings or telescopic sliding guards, in particular of a machine tool, in addition to the spindle (15).

## Revendications

1. Dispositif de support pour une longue broche serrée (15), en particulier pour la broche (15) d'une vis d'entraînement à billes sur une machine-outil, dans lequel un chariot (16) peut être déplacé sur la broche (15) au moyen d'un écrou entraînable, dans lequel le dispositif de support comporte plusieurs supports (1, 1', 1") qui sont disposés des deux côtés du chariot (16), et qui, chacun, protègent la broche (15) contre des mouvements perpendiculaires au sens longitudinal de la broche, et qui peuvent être déplacés parallèlement à la broche (15) sur une voie de roulement (14), et qui, selon les mouvements de translation du chariot (16), sont d'un côté poussés par le chariot en direction de l'extrémité de la broche (15) et de l'autre côté entraînés par le chariot et déposés le long de la broche (15) à des positions d'emploi espacées les unes des autres, **caractérisé en ce que**
- chaque support (1, 1', 1") comporte un coupleur qui peut être placé soit en position de dégagement, soit en position d'engagement et qui assure la connexion mécanique avec un support (1, 1', 1") adjacent ou avec le chariot (16),
- et **en ce que** chaque support (1, 1', 1") comporte un verrou qui peut être placé soit en position de dégagement, soit en position d'engagement et qui assure le blocage mécanique dans la position d'emploi,
- et **en ce que** le coupleur et le verrou sont disposés et mécaniquement reliés entre eux de façon telle qu'à l'arrivée d'un support (1, 1', 1") dans sa position d'emploi, le verrou, tout en freinant doucement le support (1, 1', 1"), se place de lui-même en position d'engagement et fait passer en même temps le coupleur en position de dégagement,
- et **en ce qu'**à l'arrivée du chariot (16) ou du support (1 , 1', 1") sur un support adjacent (1, 1', 1") se trouvant en position d'emploi, le coupleur, tout en freinant doucement le support adjacent (1, 1', 1"), se place de lui-même en position d'engagement et fait passer en même temps le verrou en position de dégagement.

2. Dispositif de support selon la revendication 1, **caractérisé en ce que** le coupleur réglable et le verrou réglable de chaque support (1, 1', 1") sont regroupés dans un levier (2) qui peut pivoter dans une certaine limite et qui, dans l'une de ses positions extrêmes de pivotement, est engagé dans un organe fixe de couplage (10) d'un support adjacent (1, 1', 1") ou du chariot (16) et qui, dans l'autre position extrême de pivotement, est engagé dans un organe fixe de verrouillage (11) situé sur la voie de roulement (14).

3. Dispositif de support selon la revendication 2, **caractérisé en ce que** le levier (2) et les organes fixes de couplage et de verrouillage (10, 11) sont chacun munis de rainures de guidage (4, 12) et de chevilles de guidage (5, 10) dont l'action est conjointe.

4. Dispositif de support selon la revendication 3, **caractérisé en ce que** les rainures de guidage (4, 12) sont réalisées en tant que courbes au tracé régulier qui assurent l'accélaration et le freinage en douceur des supports (1, 1', 1") lors du couplage et du découplage de ces derniers.

5. Dispositif de support selon l'une quelconque des revendications 2 à 4, **caractérisé en ce que** le levier (2) est bloqué dans ses positions extrêmes de pivotement au moyen d'un dispositif d'encliquetage (8), de préférence un loqueteau à billes.

6. Dispositif de support selon l'une quelconque des revendications 2 à 5, **caractérisé en ce que** les organes fixes de verrouillage (11) sont disposés le long de la voie de roulement (14) à des distances fixes déterminées, **en ce que** chaque organe fixe de verrouillage (11), vu perpendiculairement à la voie de roulement, présente un écart propre par rapport à celle-ci, et **en ce que** seul le verrou d'un seul support (1, 1', 1"), positionné en conséquence, peut être engagé dans l'organe fixe de verrouillage (11) correspondant.

7. Dispositif de support selon l'une quelconque des revendications précédentes, **caractérisé en ce que** chaque support (1, 1', 1") comporte un chariot (13) qui est mobile sur la voie de roulement (14), ainsi qu'un manchon de support (17) qui enveloppe la broche (15).

8. Dispositif de support selon la revendication 7, **caractérisé en ce que** la voie de roulement (14) est un rail de roulement et **en ce que** le chariot (13) est guidé sur le rail de roulement au moyen d'un élément de guidage à billes.

9. Dispositif de support selon l'une quelconque des revendications précédentes, **caractérisé en ce qu'**il maintient et supporte en mouvement de translation, outre la broche (15), les éléments d'un ou de plusieurs couvercles télescopiques ou de portes coulissantes télescopiques, en particulier d'une machine-outil.
